# EUROPÄISCHE PATENTANMELDUNG

(11) **EP 2 883 768 A1**
(43) Veröffentlichungstag der Anmeldung: **17.06.2015**
(21) Anmeldenummer: 13198503.8
(22) Anmeldetag: 19.12.2013
(51) Int. Cl.: B60T 17/04

(54) **Kupplungskopfeinheit für ein Nutzfahrzeug und Verfahren zum Ankoppeln einer Versorgungsleitung und einer Steuerleitung an eine pneumatisch betriebene Bremsanlage**

(30) Priorität: 13.12.2013 DE 102013114048
(71) Anmelder: Schmitz Cargobull AG, 48341 Altenberge (DE)
(72) Erfinder: Ruhkemper, Uwe, 48565 Steinfurt (DE)
(74) Vertreter: Cohausz & Florack

(57) **Zusammenfassung**

Eine erfindungsgemäße Kupplungskopfeinheit umfasst einen Versorgungsanschluss (2), einen Steueranschluss (3), einen mit dem Versorgungsanschluss (2) verbundenen Versorgungsauslass (4), einen über eine Verbindungsleitung (9) mit dem Versorgungsauslass (4) verbundenen Steuerauslass (6) und ein in Abhängigkeit vom Kopplungszustand und von der Druckbeaufschlagung der Steuerleitung (S) die Verbindungsleitung (9) sperrendes oder freigebendes Stellelement (14). Dieses ist permanent mit dem Steueranschluss (3) verbunden und hat ein bei Druckbeaufschlagung des Steueranschlusses (3) in eine die Verbindungsleitung sperrende Sperrstellung und bei drucklosem Steueranschluss (3) in eine die Verbindungsleitung (9) zwischen dem Versorgungsanschluss (2) und dem Steuerauslass (6) freigebende Neutralstellung rückendes Stellglied (15). Ebenso ist ein bei in Neutralstellung befindlichem ersten Stellelement (14) und druckbeaufschlagtem Versorgungsanschluss (2) den Steueranschluss (3) und den Steuerauslass (6) trennendes und eine Verbindung zwischen dem Verbindungsanschluss (2) und dem Steuerauslass (6) freigebendes erstes Sperrventil (10) vorhanden, das bei druckbeaufschlagtem Steueranschluss (3) die Verbindung zwischen dem Steueranschluss (3) und dem Steuerauslass (6) freigibt und die Verbindung zwischen dem Versorgungsanschluss (2) und dem Steuerauslass (6) unterbricht. Des Weiteren ist ein zweites Stellelement (17) vorgesehen, das sich bei druckbeaufschlagtem Versorgungsanschluss (2) in einer Sperrstellung, in der es bei gleichzeitig druckbeaufschlagter und angekoppelter Steuerleitung (S) das erste Stellelement (14) in seiner Sperrstellung blockiert, und das sich bei druckloser Versorgungsleitung (V) in einer Neutralstellung befindet, in der das erste Stellelement (14) freigegeben ist.

## Beschreibung

Die Erfindung betrifft eine Kupplungskopfeinheit für ein Nutzfahrzeug, das mit einer pneumatisch betätigten Bremseinrichtung ausgestattet ist. Eine solche Kupplungskopfeinheit umfasst üblicherweise einen Versorgungsanschluss zum Ankoppeln einer mit Druckluft beaufschlagbaren Versorgungsleitung, einen Steueranschluss zum Ankoppeln einer mit Druckluft beaufschlagbaren Steuerleitung, einen mit dem Versorgungsanschluss verbundenen Versorgungsauslass zum Anschluss eines Versorgungseingangs der Bremseinrichtung, einen Steuerauslass zum Anschluss eines Steuereingangs der Bremseinrichtung, eine Verbindungsleitung, die den Steuerauslass und den Versorgungsauslass miteinander verbindet, und ein Stellelement, das bei angekoppelter Steuerleitung die Verbindungsleitung sperrt und bei abgekoppelter Steuerleitung die Verbindungsleitung freigibt.

Typischerweise handelt es sich bei Nutzfahrzeugen der hier in Rede stehenden Art um Sattelauflieger, in der Fachsprache auch "Trailer" genannt, für einen Sattelzug oder um einen Anhänger für einen Lastkraftwagen.

Die hier behandelten Kupplungskopfeinheiten werden bei Bremsanlagen für derartige Nutzfahrzeuge eingesetzt. Über die Versorgungsleitung wird dabei üblicherweise ein Druckluftspeicher gespeist, der die zum Betätigen der Bremsen erforderliche Druckluft bereitstellt. Über die Steuerleitung werden dagegen die Steuerbefehle an die Bremsanlage geliefert, die den Bremsvorgang auslösen. Bei konventionellen Luftdruckbremsen erfolgt auch die Übertragung der Steuerbefehle üblicherweise pneumatisch. Im Fahrbetrieb schwankt bei solchen Luftdruckbremsanlagen folglich der Druck in der Steuerleitung entsprechend häufig.

Um sicherzustellen, dass das Nutzfahrzeug auch im vom jeweiligen Zugfahrzeug abgekoppelten Zustand selbsttätig still stehen bleibt, sind Nutzfahrzeuge in der Regel mit einer Zwangsbremseinrichtung ausgerüstet. Diese setzen beim Abfall des Drucks in der Versorgungsleitung selbsttätig das Fahrzeug fest und sichern es so gegen Wegrollen.

In der Praxis ergeben sich allerdings trotz dieser Sicherung dadurch Probleme, dass beim Ankoppeln des Nutzfahrzeugs an eine Zugmaschine die vom Zugfahrzeug kommenden Steuer- und Versorgungsleitungen an die korrespondierenden Anschlüsse manuell angelegt werden müssen und ab dem Moment, in dem die Verbindung hergestellt ist, die Zwangsbremse sich selbsttätig löst, um einen normalen Fahr- und Bremsbetrieb zu ermöglichen.

Um hierbei zu verhindern, dass sich die Zwangsbremse löst, bevor die Bremsanlage der Zugmaschine die Kontrolle über die Bremsanlage des von ihr zu ziehenden Nutzfahrzeugs übernommen hat, muss beim Ankoppeln der Steuer- und Versorgungsleitung eine bestimmte Reihenfolge eingehalten werden. So muss üblicherweise gewährleistet sein, dass die Steuerleitung an die Bremsanlage des Nutzfahrzeugs angeschlossen ist, bevor die Versorgungsleitung angekoppelt wird. Bei Nichtbefolgen dieser Reihenfolge besteht die Gefahr, dass über die Versorgungsleitung bereits so viel Druckluft in das Bremssystem des Nutzfahrzeugs eingespeist wird, dass sich die Zwangsbremse löst, bevor die Steuerleitung angeschlossen ist, über die erst die Bremsanlage des Nutzfahrzeugs in einen definierten, ordnungsgemäßen Zustand versetzt wird.

Es sind unterschiedlichste Vorschläge gemacht worden, um sicherzustellen, dass die Ankopplung von Steuer- und Versorgungsleitung an ein Nutzfahrzeug stets in der richtigen Reihenfolge erfolgt. Ein Beispiel für einen solchen Vorschlag ist in der DE 10 2011 008 271 B3 beschrieben. Bei der aus dieser Patentveröffentlichung bekannten Kupplungskopf-Anordnung für eine pneumatische Verbindung eines Luftbremssystems eines Anhängers erfolgt die Ankopplung der Bremsanlage des Anhängers mit dem jeweiligen Zugfahrzeug in üblicher Weise mittels einer Versorgungsleitung und einer Steuerleitung, die jeweils vom Zugfahrzeug kommen. Die Versorgungsleitung und die Steuerleitung tragen dazu an ihren Enden jeweils einen entsprechend ausgeformten Kupplungskopf, der an den jeweils zugeordneten Anschluss der Kupplungsanordnung so angepasst ist, dass nur der an der Steuerleitung vorgesehene Kupplungskopf an den Steueranschluss und nur der an der Versorgungsleitung vorhandene Kupplungskopf an den Versorgungsanschluss der Kupplungskopf-Anordnung angeschlossen werden kann.

Die Kupplungskopf-Anordnung hat bei der bekannten Kupplungskopf-Anordnung eine zwischen der Versorgungsleitung und der Steuerleitung querverlaufende pneumatische Verbindung, um die Steuerleitung nach der Ankopplung der Versorgungsleitung an seinem entsprechenden Anhänger-Kupplungskopf mit Druck zu beaufschlagen. Die zwischen der Steuer- und der Versorgungsleitung vorhandene Verbindung wird durch ein nach Art eines mechanischen Schalters ausgebildetes Ventil unterbrochen oder freigegeben. Dessen Stellung ist davon abhängig, ob der Versorgungskopf der Steuerleitung an die Kupplungskopf-Anordnung angeschlossen ist. Ist dies der Fall, so ist die Verbindungsleitung geschlossen und die Steuerleitung von der Versorgungsleitung getrennt. Die über die Steuerleitung gelieferten pneumatischen Steuersignale werden dann direkt zum Steuerauslass der Kupplungskopfanordnung geleitet. Anschließend kann problemlos die Versorgungsleitung an die Kupplungskopf-Anordnung angeschlossen werden. Wird dagegen irrtümlich zuerst die Versorgungsleitung an die Kupplungskopf-Anordnung angeschlossen, so strömt Druckluft von der Versorgungsleitung nicht nur zum Versorgungsauslass, sondern über die nun offene Verbindungsleitung auch zum Steuerauslass der Kupplungskopf-Anordnung. Das dort auf diese Weise anstehende Druckluft-Signal wird von der angeschlossenen Bremsanlage als Signal zum Bremsen ausgelegt und das Nutzfahrzeug dementsprechend in der gebremsten Stellung gehalten.

Die voranstehend erläuterte bekannte Kupplungskopf-Anordnung hat sich in der Praxis für solche Nutzfahrzeuge bewährt, die in Kombination mit Zugmaschinen betrieben werden, deren Steuer- und Versorgungsleitungen im Stillstand mit ausreichendem Druck beaufschlagt sind. Wichtige Zugmaschinenhersteller bieten diese Option jedoch nicht. Vielmehr ist dort bis zur Aufnahme des Fahrbetriebs die Steuerleitung drucklos. Dies wiederum hat zur Folge, dass bei einer Kupplungskopf-Anordnung der voranstehend erläuterten bekannten Art die Gefahr des Wegrollens des Nutzfahrzeugs selbst dann besteht, wenn beim Ankuppeln von Versorgungs- und Steuerleitung die richtige Reihenfolge eingehalten wird.

Vor dem Hintergrund des voranstehend erläuterten Standes der Technik lag der Erfindung die Aufgabe zu Grunde, mit einfachen Mitteln eine Kupplungskopfeinheit zu schaffen, bei dem ein unbeabsichtigtes Wegrollen des Nutzfahrzeugs während des Ankoppelns der Versorgungs- und Steuerleitung unabhängig vom Druckzustand in der Steuerleitung sicher verhindert ist.

Diese Aufgabe ist erfindungsgemäß dadurch gelöst worden, dass eine Kupplungskopfeinheit der hier in Rede stehenden Art die in Anspruch 1 angegebenen Merkmale aufweist.

Vorteilhafte Ausgestaltungen der Erfindung sind in den abhängigen Ansprüchen angegeben und werden nachfolgend wie der allgemeine Erfindungsgedanke im Einzelnen erläutert.

Eine erfindungsgemäße Kupplungskopfeinheit für ein Nutzfahrzeug, das mit einer pneumatisch betätigten Bremseinrichtung ausgestattet ist, umfasst in Übereinstimmung mit dem eingangs erläuterten Stand der Technik
- einen Versorgungsanschluss zum Ankoppeln einer mit Druckluft beaufschlagbaren Versorgungsleitung,
- einen Steueranschluss zum Ankoppeln einer mit Druckluft beaufschlagbaren Steuerleitung,
- einen mit dem Versorgungsanschluss verbundenen Versorgungsauslass zum Anschluss eines Versorgungseingangs der Bremseinrichtung,
- einen Steuerauslass zum Anschluss eines Steuereingangs der Bremseinrichtung,
- eine Verbindungsleitung, die den Steuerauslass und den Versorgungsauslass miteinander verbindet,
und
- ein Stellelement, das bei angekoppelter und druckbeaufschlagter Steuerleitung die Verbindungsleitung sperrt und bei abgekoppelter Steuerleitung die Verbindungsleitung freigibt.

### Erfindungsgemäß ist nun bei einer solchen Kupplungskopfeinheit

- das Stellelement permanent mit dem Steueranschluss verbunden und ein Stellglied vorhanden, das bei Druckbeaufschlagung des Steueranschlusses in eine Sperrstellung rückt, in der die Verbindungsleitung gesperrt ist, und das bei drucklosem Steueranschluss in eine Neutralstellung rückbar ist, in der es die Verbindungsleitung zwischen dem Versorgungsanschluss und dem Steuerauslass freigibt,
- ein erstes Sperrventil vorgesehen, das
   - bei in Neutralstellung befindlichem ersten Stellelement und druckbeaufschlagtem Versorgungsanschluss eine Verbindung zwischen dem Steueranschluss und dem Steuerauslass unterbricht, während es eine Verbindung zwischen dem Verbindungsanschluss und dem Steuerauslass freigibt
      und
   - bei druckbeaufschlagtem Steueranschluss die Verbindung zwischen dem Steueranschluss und dem Steuerauslass freigibt und die Verbindung zwischen dem Versorgungsanschluss und dem Steuerauslass unterbricht,
- ein zweites Stellelement vorgesehen,
   - das sich bei druckbeaufschlagtem Versorgungsanschluss in einer Sperrstellung, in der es bei gleichzeitig druckbeaufschlagter und angekoppelter Steuerleitung das erste Stellelement in seiner Sperrstellung blockiert,
      und
   - das sich bei druckloser Versorgungsleitung in einer Neutralstellung befindet, in der das erste Stellelement freigegeben ist.

Durch das erfindungsgemäße Zusammenwirken von Stellelementen und Sperrventilen wird im Einsatz erreicht, dass sich die über die erfindungsgemäße Kupplungskopfeinheit angesteuerte Druckluftbremsanlage des jeweiligen Nutzfahrzeugs unabhängig davon im gebremsten Zustand befindet, in welcher Reihenfolge die Versorgungs-und die Steuerleitung an den Kupplungskopf angekoppelt werden.

Indem mittels des zweiten Stellelements das erste Stellelement verriegelt wird, wenn es die Verbindungsleitung sperrt, wird auch bei in Folge eines Bremsvorgangs auftretenden Druckschwankungen die Verbindung zwischen dem Steuerauslass und der Versorgungsdruckluft sicher unterbunden, so dass durch eine solche Verbindung möglicherweise ausgelöste Fehlfunktionen ausgeschlossen sind.

Grundsätzlich können die Stellbewegungen der bei einer erfindungsgemäßen Kupplungskopfeinheit jeweils vorgesehenen Stellelemente und Ventile in jeder geeigneten Weise, beispielsweise mechanisch, hydraulisch oder elektrisch bewirkt werden. Als besonders praktisch hat es sich jedoch erwiesen, wenn sämtliche Stellvorgänge unabhängig von zusätzlicher Energiezufuhr alleine durch die jeweils anliegende Druckluft bewirkt werden und die einzelnen Stellelemente so ausgebildet sind, dass sie bei wegfallender Druckluft ihre jeweilige Neutralstellung selbsttätig einnehmen. Hierzu können die Stellelemente jeweils mit einem elastischen Element ausgerüstet sein, das eine in die Neutralstellung des jeweiligen Stellelements gerichtete elastische Rückstellkraft ausübt.

Die Schaltgenauigkeit, mit der das zweite Stellelement das die Verbindungsleitung freigebende und schließende Stellelement in seiner die Verbindungsleitung unterbrechenden Sperrstellung verriegelt, kann dadurch erhöht werden, dass ein zweites Ventil vorgesehen ist, das bei an den Steueranschluss angeschlossener Steuerleitung eine Verbindung zwischen dem Versorgungsanschluss und dem zweiten Stellelement freigibt, so dass das Stellglied des Stellelements bei druckbeaufschlagtem Versorgungsanschluss in seine ausgerückte Stellung rückt. Gleichzeitig kann das Ventil als 3/2-Wegeventil so ausgestaltet sein, dass es bei abgekoppelter Steuerleitung das zweite Stellelement mit dem Versorgungsanschluss derart verbindet, dass bei druckbeaufschlagtem Versorgungsanschluss auf das zweite Stellelement eine in Richtung von dessen Neutralstellung gerichtete Rückstellkraft wirkt. Auch durch diese Maßnahme wird die Schaltgenauigkeit des zweiten Stellglieds erhöht.

Das zweite Ventil kann dadurch betätigt werden, dass es mit dem Steueranschluss über ein Koppelglied, beispielsweise einem Schieber, verkoppelt ist, das einer von einem elastischen Element ausgeübten Rückstellkraft ausgesetzt ist, die das Koppelglied bei Fehlen einer Steuerleitung am Steueranschluss in seine Ausgangsstellung bewegt.

Auch bei einer erfindungsgemäßen Kupplungskopfeinheit gilt die Regel, dass zuerst die druckführende Steuerleitung und dann die druckführende Versorgungsleitung angeschlossen werden soll. Bei dieser Anschlussreihenfolge liegt am Steuerauslass Steuerdruckluft an und das Nutzfahrzeug wird dementsprechend gebremst gehalten, bevor die Versorgungsleitung angeschlossen wird. Dabei sperrt das Stellelement die Verbindungsleitung zwischen Steuerauslass und Versorgungsauslass, da es sich aufgrund der an ihm über den Steueranschluss anliegenden Steuerdruckluft in seiner aktiven Sperrstellung befindet.

Im Fall, dass zunächst die Versorgungsleitung angeschlossen wird oder das Nutzfahrzeug an eine Zugmaschine angekoppelt wird, bei der die Steuerleitung bis zur ersten Bremsung nach Inbetriebnahme drucklos ist, die Versorgungsleitung jedoch stets Druckluft führt, liegt am Steuerauslass einer erfindungsgemäßen Kupplungskopfeinheit solange die Bremsung sicherstellende Versorgungsdruckluft an, bis auch der Steueranschluss ordnungsgemäß angeschlossen ist und Steuerdruckluft führt. Dies wird erfindungsgemäß dadurch erreicht, dass das Stellelement die Verbindungsleitung, über die bei einer erfindungsgemäßen Kupplungskopfeinheit der Steuerauslass auf der einen Seite und der Versorgungsauslass auf der anderen Seite miteinander verbunden sind, in Abhängigkeit vom am Steueranschluss anliegenden Druck freigibt und schließt, und dadurch, dass gleichzeitig ein Sperrventil vorgesehen ist, das die Verbindung zwischen dem Steuerauslass und dem Steueranschluss unterbricht, wenn am Versorgungsanschluss Druckluft anliegt, am Steueranschluss jedoch nicht.

Infolge dieser Verschaltung von Stellelement und Sperrventil liegt am Steueranschluss Druckluft an, sobald an den Steueranschluss eine Steuerdruckluft führende Steuerleitung oder an den Versorgungsanschluss die ebenfalls Druckluft führende Versorgungsleitung angeschlossen wird. So strömt im Fall, dass die Versorgungsleitung zuerst angeschlossen wird, nicht nur Versorgungsdruckluft vom Versorgungsanschluss zum Versorgungsauslass, sondern auch über die Verbindungsleitung zum Steuerauslass. Die Verbindungsleitung ist in diesem Zustand frei durchgängig, weil das Stellelement wegen des Fehlens von Druckluft am Steueranschluss inaktiv ist und sich in seiner Neutralstellung befindet. Wird anschließend die Steuerleitung an den Steueranschluss angekoppelt, strömt Steuerdruckluft zum Stellelement, das sich daraufhin in seine Sperrstellung bewegt und die Verbindungsleitung unterbricht. Damit einhergehend bewegt sich das Sperrventil in eine Stellung, in der es den Durchfluss vom Steueranschluss zum Steuerauslass freigibt, so dass nun Steuerdruckluft am Steuerauslass anliegt.

Da bei einer erfindungsgemäßen Kupplungskopfeinheit das Stellelement die Verbindungsleitung erst dann unterbricht und das Sperrventil die Verbindung zwischen Steueranschluss und Steuerauslass erst dann freigibt, wenn Steuerdruckluft am Steueranschluss anliegt, bleibt das Nutzfahrzeug über die am Versorgungsanschluss anstehende Versorgungsdruckluft auch dann sicher gebremst, wenn die die Versorgungs- und Steuerdruckluft liefernde Zugmaschine die Steuerleitung erst beim nach Inbetriebnahme ersten Bremsvorgang mit Druckluft beaufschlagt.

Beim Abkoppeln des Nutzfahrzeugs von der Bremsdruckluftversorgung ist ein unbeabsichtigtes Wegrollen in gleicher Weise verhindert. Wird in ordnungsgemäßer Weise zunächst die Versorgungsleitung abgekoppelt, bleibt die Verbindungsleitung zwischen dem Versorgungsanschluss und -auslass durch das Stellelement weiterhin verschlossen und die Verbindung zwischen Steueranschluss und -auslass weiterhin durchgängig. Das Nutzfahrzeug wird dementsprechend über die am Steuerauslass nach wie vor anstehende Steuerdruckluft gebremst. Wird dagegen zuerst die Steuerleitung abgekoppelt oder drucklos, gibt das Stellelement die Verbindungsleitung frei, so dass Versorgungsdruckluft zum Steuerauslass strömt. Gleichzeitig trennt das Sperrventil die Verbindung zwischen Steuerauslass und Steueranschluss, so dass die Bremsung über die am Steuerauslass anstehende Versorgungsdruckluft aufrechterhalten bleibt, bis auch die Versorgungsleitung abgekoppelt und damit einhergehend die Zwangsbremsanlage des Nutzfahrzeugs aktiv wird.

Nachfolgend wird die Erfindung anhand von Ausführungsbeispielen näher erläutert. Es zeigen jeweils schematisch:

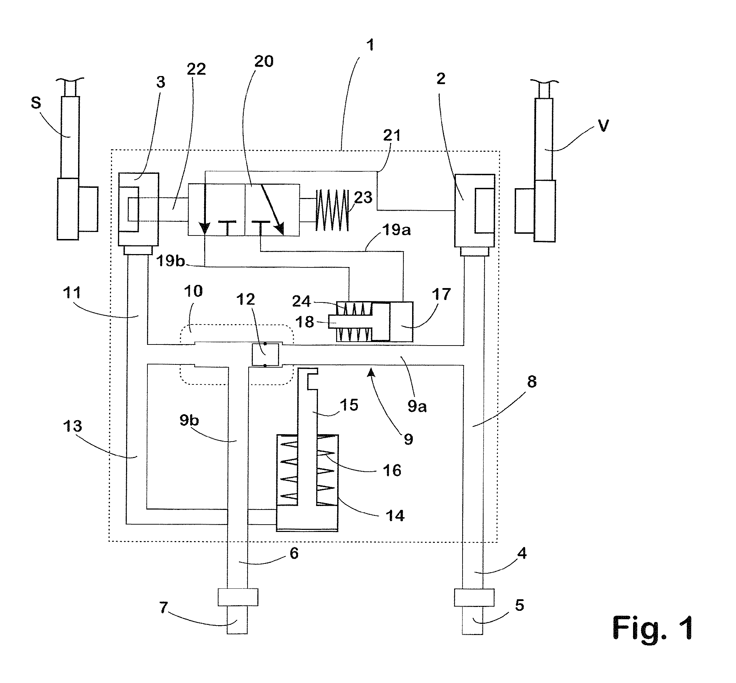

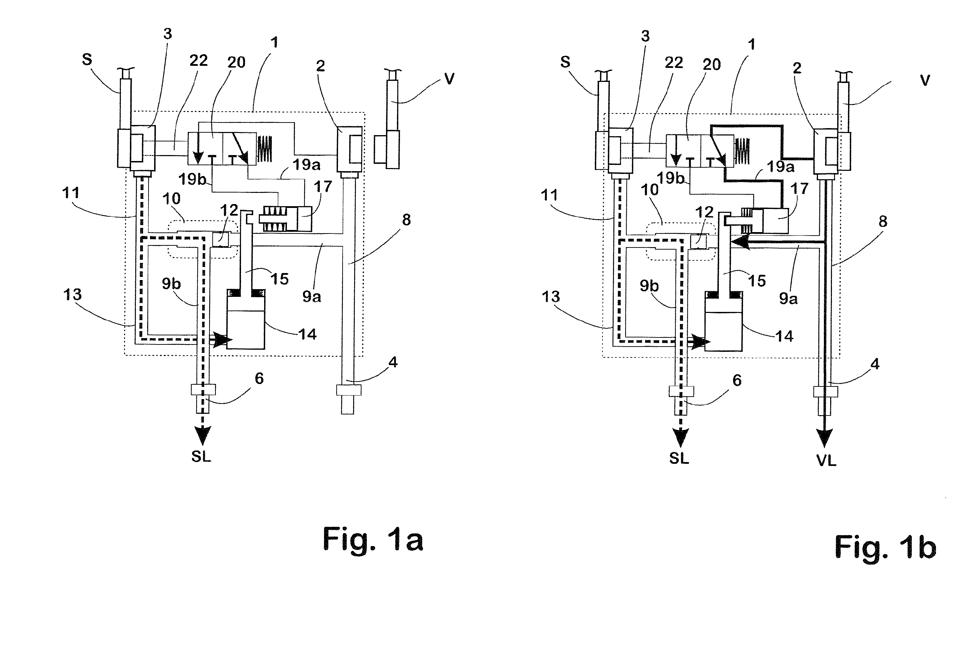

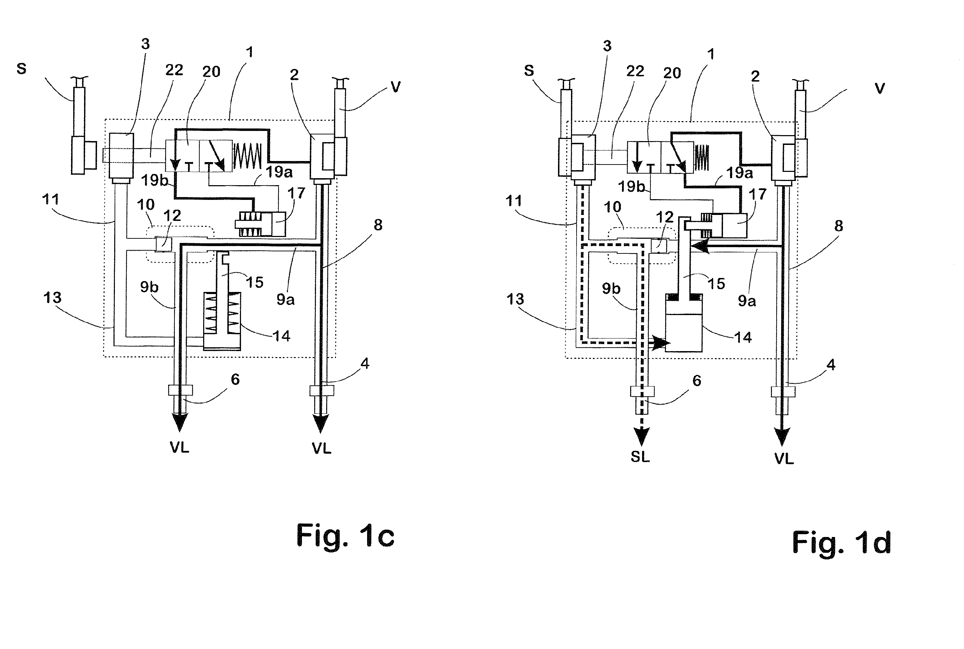

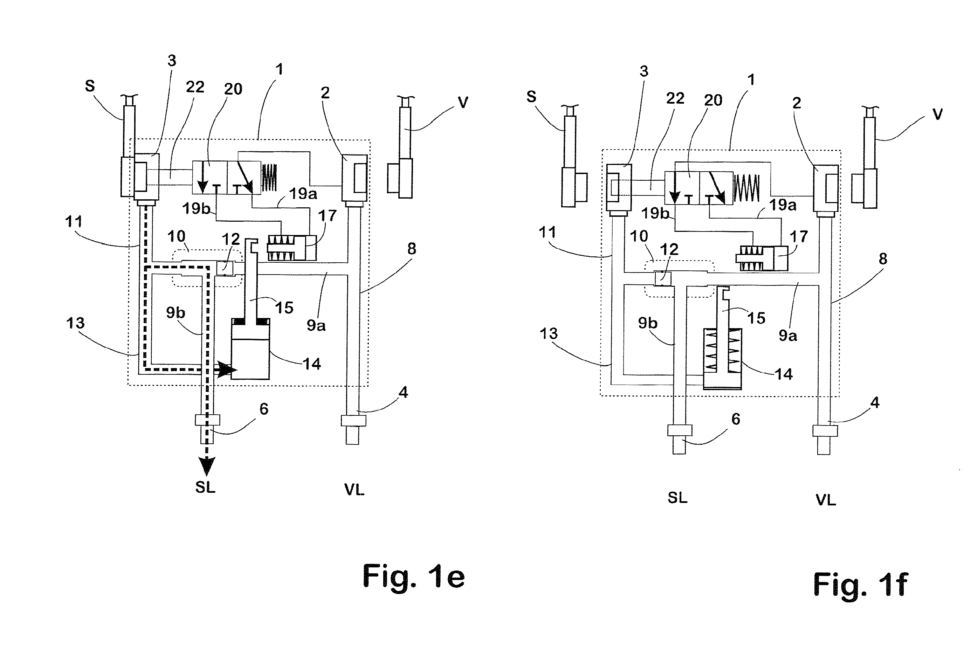

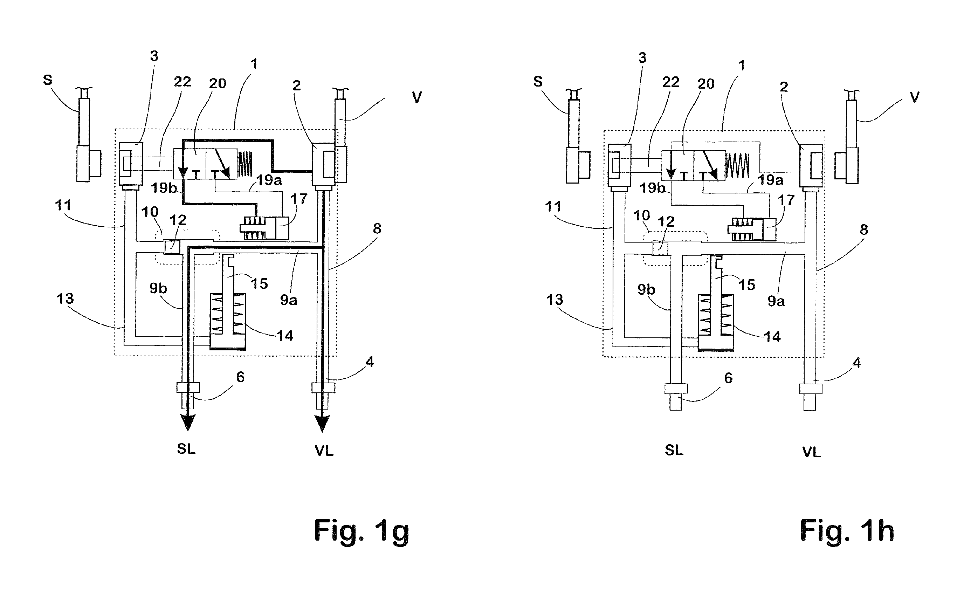

- Fig. 1: eine Kupplungskopfeinheit für eine pneumatisch betriebene Bremsanlage eines Nutzfahrzeugs;
- Fig. 1a - 1h: Betriebszustände der in Fig. 1 dargestellten Kupplungskopfeinheit beim An- und Abkoppeln an die Druckluftversorgung einer hier nicht gezeigten Zugmaschine.

Die in Fig. 1 dargestellte Kupplungskopfeinheit 1 für eine hier nicht weiter gezeigte pneumatisch betätigbare Druckluftbremseinrichtung eines ebenfalls nicht dargestellten Nutzfahrzeugs umfasst einen Versorgungsanschluss 2 zum Ankoppeln einer mit Druckluft beaufschlagbaren Versorgungsleitung V, einen Steueranschluss 3 zum Ankoppeln einer mit Druckluft beaufschlagbaren Steuerleitung S, einen Versorgungsauslass 4, der über eine Versorgungsbremsleitung 5 mit einem zugeordneten Eingang einer hier nicht gezeigten Bremseinrichtung verbunden ist, und einen Steuerauslass 6, der über eine Bremssteuerleitung 7 zum hier ebenfalls nicht gezeigten Anschluss eines Steuereingangs der Bremseinrichtung führt.

Bei dem Nutzfahrzeug, an dem die Kupplungskopfeinheit 1 montiert ist, kann es sich beispielsweise um einen Sattelauflieger für einen Sattelzug, der in der Fachsprache auch als "Trailer" bezeichnet wird, oder um einen konventionellen Anhänger handeln, der an einen Lastkraftwagen angekoppelt wird.

Der Versorgungsanschluss 2 ist über einen Versorgungskanal 8 permanent mit dem Versorgungsauslass 4 verbunden.

Vom Versorgungskanal 8 zweigt eine Verbindungsleitung 9 ab, über die eine Verbindung zwischen dem Steuerauslass 6 und dem Versorgungsauslass 4 einerseits und dem Versorgungsanschluss 2 hergestellt werden kann.

In der Verbindungsleitung 9 sitzt ein Sperrventil 10. An einen ersten Eingang des Sperrventils 10 ist der Abschnitt 9a der Verbindungsleitung 9 angeschlossen, der den Versorgungskanal 8 mit dem Sperrventil 10 verbindet. An einen zweiten Eingang des Sperrventils 10 ist ein Steuerkanal 11 angeschlossen, über den das Sperrventil 10 mit dem Steueranschluss 3 verbunden ist. An den Ausgang des Sperrventils 10 ist ein zweiter Abschnitt 9b der Verbindungsleitung 9 angeschlossen, der zum Steuerauslass 6 führt.

Abhängig vom an seinen Eingängen anliegenden Druck schaltet das Sperrventil 10 eine Verbindung zwischen den Abschnitt 9a und 9b der Verbindungsleitung 9 oder zwischen dem Steuerkanal 11 und Abschnitt 9b der Verbindungsleitung 9. Zu diesem Zweck ist im Sperrventil 10 ein Sperrkolben 12 vorgesehen, der bei im Abschnitt 9a anstehender Versorgungsdruckluft VL gegen den dem Steuerkanal 11 zugeordneten Eingang des Sperrventils 10 geschoben wird und ihn so verschließt und der bei im Steuerkanal 11 anstehender Steuerdruckluft SL gegen den dem Abschnitt 9a zugeordneten Eingang des Sperrventils 10 geschoben wird und diesen verschließt.

An einer zwischen dem Sperrventil 10 und dem Steueranschluss 3 angeordneten Stelle geht vom Steuerkanal 11 ein Steuerabzweig 13 ab, der zum Steueranschluss eines Stellelements 14 führt.

Das Stellelement 14 ist als pneumatisch betätigbare Zylinder-Kolben-Einheit ausgebildet, deren Stellkolben 15 bei Druckbeaufschlagung des Stellelements 14 in eine Sperrstellung ausrückt. In dieser Sperrstellung unterbricht der Stellkolben 15 den Durchfluss durch den Abschnitt 9a der Verbindungsleitung 9, der den Versorgungskanal 8 mit dem Sperrventil 10 verbindet, in Strömungsrichtung der Versorgungsdruckluft V vor dem Sperrventil 10.

Gleichzeitig umfasst das Stellelement 14 ein als konventionelle Spiralfeder ausgebildetes elastisches Element 16. Das elastische Element 16 übt auf den Stellkolben 15 eine elastische Rückstellkraft aus, durch die der Stellkolben 15 bei Wegfall der Steuerdruckluft SL im Steuerkanal 11 und in Folge des damit einhergehenden Druckloswerdens des Stellelements 14 in seine Neutralstellung gedrückt wird, in der der Durchfluss durch den Abschnitt 9a der Versorgungsleitung 9 freigegeben ist.

Des Weiteren weist die Kupplungskopfeinheit 1 ein zweites Stellelement 17 auf, das wie das Stellelement 14 als pneumatisch betätigte Kolben-Zylinder-Einheit ausgebildet ist. Das zweite Stellelement 17 ist mit seiner einen Kammer, bei deren Druckbeaufschlagung der Kolben 18 des Stellelements 17 ausfährt, über eine zweite Verbindungsleitung 19a an den einen Ausgang eines 3/2-Wegeventils 20 angeschlossen. Dagegen ist die zweite Kammer des Stellelements 17, bei deren Druckbeaufschlagung der Kolben 18 des Stellelements 17 zurückgezogen wird, über eine Verbindungsleitung 19b an einen zweiten Ausgang des 3/2-Wegeventils 20 angeschlossen. Der Eingang des 3/2-Wegeventils 20 ist über eine Verbindungsleitung 21 mit dem Versorgungsanschluss 2 verbunden.

Das 3/2-Wegeventil 20 wird über einen als Koppelglied dienenden Schieber 22 geschaltet, der mechanisch mit dem 3/2-Wegeventil 20 verkoppelt ist. Bei nicht angeschlossener Steuerleitung S ragt der Schieber 22 mit seinem vom 3/2-Wegeventil 20 abgewandten Ende in den Steueranschluss 3. In dieser Stellung wird der Schieber 22 durch ein auf ihn wirkendes elastisches Element 24 gehalten, bis beim Ankoppeln der Steuerleitung S an den Steueranschluss 3 aufgrund der dabei wirkenden Kräfte der Schieber 22 entgegen der elastischen Belastung in seine eingerückte Stellung verschoben wird. Das bei Druckbeaufschlagung der Verbindungsleitung 19b einsetzende Einziehen des Kolbens 18 wird unterstützt durch ein elastisches Element 24, das in der Stelleinrichtung 17 angeordnet ist und eine in den Zylinder der Stelleinrichtung 17 hinein gerichtete Rückstellkraft auf den Kolben 18 ausübt.

Bei nicht angeschlossener Steuerleitung S und dementsprechend in den Steueranschluss 3 ausgerücktem Schieber 22 hält das 3/2-Wegeventil 20 die Verbindung zwischen der Verbindungsleitung 21 und der Verbindungsleitung 19a geschlossen, wogegen die Verbindung zwischen der Verbindungsleitung 21 und der Verbindungsleitung 19b geöffnet ist. Bei angeschlossener Steuerleitung S und dementsprechend eingerücktem Schieber 22 schließt das 3/2-Wegeventil 20 dagegen die Verbindung zwischen der Verbindungsleitung 21 und der Verbindungsleitung 19b, wogegen die Verbindung zwischen den Verbindungsleitungen 19a, 21 bei angeschlossener Steuerleitung S geöffnet ist.

Auf diese Weise wird das zweite Stellelement 17 in Abhängigkeit von der An- und Abwesenheit der Steuerleitung S am Steueranschluss 3 so mit Versorgungsdruckluft VL beaufschlagt, dass es sich bei angekoppelter Steuerleitung S und angekoppelter, druckbeaufschlagter Versorgungsleitung V in seiner Sperrstellung, in der er, sofern dieser ausgerückt ist, den Stellkolben 15 des ersten Stellelements 14 verriegelt (Figuren 1b, 1d), und bei abgekoppelter Steuerleitung S in seiner Neutralstellung befindet, in der der Stellkolben 15 des Stellelements 14 freigegeben ist und das Stellelement 14 seine Neutralstellung einnehmen kann (Figuren 1a, 1c, 1e). Beim in den Fig. 1 gezeigten Ausgangszustand, bei dem sowohl die Versorgungsleitung V als auch die Steuerleitung S von der jeweiligen Kupplungskopfeinheit 1 abgekoppelt sind, wirkt die hier nicht gezeigte Zwangsbremse und sichert das Nutzfahrzeug gegen Wegrollen.

Wird nun die in den Figuren 1a, 1b verdeutlichte ordnungsgemäße Abfolge des Anschlusses der hier mit Steuerdruckluft SL beaufschlagten Steuerleitung S und der Versorgungsleitung V beachtet, so wird zunächst die Steuerleitung S an den Steueranschluss 3 angeschlossen. Durch die in den Steuerkanal 11 einströmende Steuerdruckluft SL wird das Sperrventil 10 so verstellt, dass sein Sperrkolben 12 die Verbindung zwischen dem Abschnitt 9b der Versorgungsleitung 9 und dem Steuerkanal 11 freigibt, während die Verbindung zwischen den Abschnitten 9a und 9b der Verbindungsleitung 9 unterbrochen ist. Die nun am Steuerauslass 6 anstehende Steuerdruckluft SL stellt bereits sicher, dass die Bremsung des Nutzfahrzeugs über den gesamten Ankopplungsvorgang aufrechterhalten bleibt. Gleichzeitig steht über den Steuerabzweig 13 Druckluft am Stellelement 14 an, das über seinen entsprechend ausgerückten Stellkolben 15 den Abschnitt 9a der Verbindungsleitung 9 unterbricht.

Da der Druck der Steuerdruckluft SL im Betrieb nicht konstant, sondern bei einer Betätigung der Betriebsbremse im Fahrbetrieb hoch und bei unbetätigter Betriebsbremse niedrig ist, ist die Steuerdruckluft SL in den Figuren durch eine gestrichelte Linie angedeutet.

Wird nun die Versorgungsleitung V an den Versorgungsanschluss 2 angeschlossen, strömt Versorgungsdruckluft VL über den Versorgungskanal 8 zum Versorgungsauslass 4 und steht gleichzeitig im Abschnitt 9a am Sperrkolben 15 des Stellelements 14 an. Durch das in dementsprechend in Sperrstellung befindliche Stellelement 14 wird der dem Abschnitt 9a zugeordnete Eingang des Sperrventils 10 drucklos und der Sperrkolben 12 in einem stabilen Stellzustand gehalten, in dem die Verbindung zwischen dem Steuerkanal 11 und dem Steuerauslass 6 offen ist. Die Bremsanlage des Nutzfahrzeugs ist nun betriebsbereit.

Beim anschließenden Fahrbetrieb hält die Stelleinrichtung 17 den Kolben 15 der ersten Stelleinrichtung 14 auch dann in seiner ausgerückten Stellung, wenn der Druck der Steuerluft SL in Folge von Bremsvorgängen so stark abfällt, dass ohne diese Verriegelung der Kolben 15 aufgrund der vom elastischen Element 16 der Stelleinrichtung 14 ausgeübten Rückstellkraft in seine Neutralstellung zurückgedrückt würde.

Im Fall, dass, wie in den Figuren 1c, 1d gezeigt, zuerst die Versorgungsleitung V an den Versorgungsanschluss 2 angeschlossen wird, so strömt Versorgungsdruckluft VL in den Versorgungskanal 8 und den Abschnitt 9a der Verbindungsleitung 9. Dieser ist in diesem Zustand frei durchgängig, da sich das Stellelement 14 aufgrund des Fehlens von Steuerdruckluft SL im Steuerkanal 11 in seiner Neutralstellung befindet, in der der Stellkolben 15 in das Stellelement 14 eingerückt ist. Zuvor hat die Stelleinrichtung 17 den Kolben 15 freigegeben, da sich der Schieber 22 in seiner in den Steueranschluss 3 eingerückten Stellung befindet und das 3/2-Wegeventil 20 dementsprechend die Verbindung zwischen der Verbindungsleitung 19b und der hier druckführenden Verbindungsleitung 21 hergestellt hat, wogegen die Verbindungsleitung 19a geschlossen ist. Folglich hat sich der Kolben 18 der Stelleinrichtung 17 in Folge der vom elastischen Element 24 ausgeübten Rückstellkraft in seine eingezogene Stellung bewegt, in der kein Formschluss mehr zwischen dem Kolben 15 der ersten Stelleinrichtung 14 und dem Kolben 18 der Stelleinrichtung 17 mehr besteht.

Durch die gleichzeitig im Abschnitt 9a anstehende Versorgungsdruckluft VL wird der Sperrkolben 12 des Sperrventils 10 in die Stellung verschoben, in der er die Verbindung zwischen dem Steuerkanal 11 und dem Steuerauslass 6 sperrt. Die Verbindung zwischen den Abschnitten 9a und 9b der Verbindungsleitung 9 ist dagegen frei und Versorgungsdruckluft VL strömt über die Verbindungsleitung 9 zum Steuerauslass 6.

Die so am Steuerauslass 6 anstehende Versorgungsdruckluft VL stellt die ordnungsgemäße Bremsung des Nutzfahrzeugs sicher, bis auch die Steuerdruckluft SL führende Steuerleitung S an die Kupplungskopfeinheit 1 angekoppelt ist. Durch die dann im Steuerkanal 11 und im Steuerabzweig 13 anstehende Steuerdruckluft SL wird das Stellelement 14 betätigt und dessen Stellkolben 15 in die Sperrstellung bewegt, in der er den Durchfluss durch den Abschnitt 9a der Verbindungsleitung 9 sperrt. Daraufhin wird der Sperrkolben 12 des Sperrventils 10 durch die am Sperrventil 10 anstehende Steuerdruckluft SL in die Position bewegt, in der er die Verbindung zwischen Steuerkanal 11 und Abschnitt 9b der Verbindungsleitung 9 freigibt, so dass Steuerdruckluft SL zum Steuerauslass strömt und die ordnungsgemäße Bremsung des Nutzfahrzeugs gewährleistet.

Aufgrund der mit dem Anschluss der Steuerleitung S einhergehenden Verschiebung des Schiebers 22 wird auch das 3/2-Wegeventil 20 umgeschaltet, so dass in der Verbindungsleitung 19a Druck ansteht. Der Kolben 18 der Stelleinrichtung 17 rückt nun wieder aus und verriegelt den Kolben 15 der Stelleinrichtung 14 in seiner ausgerückten Stellung (Fig. 1d).

Unabhängig von der Reihenfolge der Ankopplung ergibt sich die voranstehend erläuterte, in den Figuren 1c, 1d dargestellte Funktion auch dann, wenn die Steuerleitung S auch im angekoppelten Zustand zunächst drucklos ist und erst nach einer ersten Bremsung von der jeweiligen Zugmaschine mit Steuerdruckluft SL beaufschlagt wird.

Wird beim Abkoppeln zunächst die Versorgungsleitung V von der Kupplungskopfeinheit 1 getrennt, so hält entweder die dann nach wie vor am Steuerauslass 6 anstehende Steuerdruckluft SL die Bremsung des Nutzfahrzeugs aufrecht, bis auch die Steuerleitung S abgekoppelt ist und die Zwangsbremseinrichtung des Nutzfahrzeugs aktiv wird (Figuren 1e, 1f).

Bei abgekoppelter Versorgungsleitung V und gleichzeitig zwar angekoppelter, jedoch druckloser Steuerleitung S wird ebenso die Zwangsbremse unmittelbar und unabhängig davon aktiv, ob die Steuerleitung S an den Steueranschluss 3 angeschlossen ist.

Aufgrund des Wegfalls des Drucks in der Verbindungsleitung rückt das elastische Federelement 24 den Kolben 18 der zweiten Stelleinrichtung 17 in seine eingerückte Stellung, so dass auch der Kolben 15 der Stelleinrichtung 14 frei gegeben ist. Im Fall, dass die Steuerleitung S druckführend ist, geht die Kupplungskopfeinheit 1 spätestens dann in ihre Ausgangstellung zurück, wenn anschließend auch die Steuerleitung S abgekoppelt wird (Fig. 1e, 1f). Wird dagegen zuerst die Steuerleitung S abgekoppelt oder drucklos, so geben das Stellelement 17 den Kolben 15 des Stellelements 17 und das Stellelement 14 den Abschnitt 9a der Verbindungsleitung 9 und das Sperrventil 10 die Verbindung zwischen den Abschnitten 9a,9b der Verbindungsleitung 9 frei, so dass Versorgungsdruckluft VL am Steueranschluss 3 ansteht und die Bremswirkung sichert, bis auch die Versorgungsleitung V abgekoppelt und die Zwangsbremseinrichtung aktiv wird (Figuren 1g, 1h).

### BEZUGSZEICHEN

- 1: Kupplungskopfeinheit
- 2: Versorgungsanschluss
- 3: Steueranschluss
- 4: Versorgungsauslass
- 5: Versorgungsbremsleitung
- 6: Steuerauslass
- 7: Bremssteuerleitung
- 8: Versorgungskanal
- 9: Verbindungsleitung
- 10: Sperrventil
- 9a: Abschnitt der Verbindungsleitung 9
- 9b: Abschnitt der Verbindungsleitung 9
- 11: Steuerkanal
- 12: Sperrkolben
- 13: Steuerabzweig
- 14: erstes Stellelement
- 15: Stellkolben des Stellelements 14
- 16: elastisches Element des Stellelements 15
- 17: zweites Stellelement
- 18: Kolben des Stellelements
- 19a: Verbindungsleitung
- 19b: Verbindungsleitung
- 20: Ventil (3/2-Wegeventil)
- 21: Verbindungsleitung
- 22: Schieber (Koppelglied)
- 23: elastisches Element
- 24: elastisches Element
- S: Steuerleitung
- SL: Steuerdruckluft
- V: Versorgungsleitung
- VL: Versorgungsdruckluft

## Patentansprüche

1. Kupplungskopfeinheit für ein Nutzfahrzeug, das mit einer pneumatisch betätigten Bremseinrichtung ausgestattet ist, umfassend
- einen Versorgungsanschluss (2) zum Ankoppeln einer mit Druckluft (VL) beaufschlagbaren Versorgungsleitung (V),
- einen Steueranschluss (3) zum Ankoppeln einer mit Druckluft (SL) beaufschlagbaren Steuerleitung (S),
- einen mit dem Versorgungsanschluss (2) verbundenen Versorgungsauslass (4) zum Anschluss eines Versorgungseingangs der Bremseinrichtung,
- einen Steuerauslass (6) zum Anschluss eines Steuereingangs der Bremseinrichtung,
- eine Verbindungsleitung (9), die den Steuerauslass (6) und den Versorgungsauslass (4) miteinander verbindet,
und
- ein Stellelement (14), das bei angekoppelter und druckbeaufschlagter Steuerleitung (S) die Verbindungsleitung (9) sperrt und bei abgekoppelter Steuerleitung (S) die Verbindungsleitung (9) freigibt,
**dadurch gekennzeichnet,**
- **dass** das Stellelement (14) permanent mit dem Steueranschluss (3) verbunden ist und ein Stellglied (15) umfasst, das bei Druckbeaufschlagung des Steueranschlusses (3) in eine Sperrstellung rückt, in der die Verbindungsleitung (9) gesperrt ist, und das bei drucklosem Steueranschluss (3) in eine Neutralstellung rückbar ist, in der es die Verbindungsleitung (9) zwischen dem Versorgungsanschluss (2) und dem Steuerauslass (6) freigibt,
- **dass** ein erstes Sperrventil (10) vorgesehen ist, das
- bei in Neutralstellung befindlichem ersten Stellelement (14) und druckbeaufschlagtem Versorgungsanschluss (2) eine Verbindung zwischen dem Steueranschluss (3) und dem Steuerauslass (6) unterbricht, während es eine Verbindung zwischen dem Verbindungsanschluss (2) und dem Steuerauslass (6) freigibt
und
- bei druckbeaufschlagtem Steueranschluss (3) die Verbindung zwischen dem Steueranschluss (3) und dem Steuerauslass (6) freigibt und die Verbindung zwischen dem Versorgungsanschluss (2) und dem Steuerauslass (6) unterbricht,
- **dass** ein zweites Stellelement (17) vorgesehen ist,
- das sich bei druckbeaufschlagtem Versorgungsanschluss (2) in einer Sperrstellung, in der es bei gleichzeitig druckbeaufschlagter und angekoppelter Steuerleitung (S) das erste Stellelement (14) in seiner Sperrstellung blockiert,
und
- das sich bei druckloser Versorgungsleitung (V) in einer Neutralstellung befindet, in der das erste Stellelement (14) freigegeben ist.

2. Kupplungskopfeinheit nach Anspruch 1, **dadurch gekennzeichnet, dass** ein zweites Ventil (20) vorgesehen ist, das bei an den Steueranschluss (3) angeschlossener Steuerleitung (S) eine Verbindung zwischen dem Versorgungsanschluss (2) und dem zweiten Stellelement (17) freigibt, so dass das Stellglied (18) des Stellelements (17) bei druckbeaufschlagtem Versorgungsanschluss (2) in seine ausgerückte Stellung rückt.

3. Kupplungskopfeinheit nach Anspruch 2, **dadurch gekennzeichnet, dass** das zweite Ventil (20) bei abgekoppelter Steuerleitung (S) das zweite Stellelement (17) mit dem Versorgungsanschluss (2) derart verbindet, dass bei druckbeaufschlagtem Versorgungsanschluss (2) auf das zweite Stellelement (17) eine in Richtung von dessen Neutralstellung gerichtete Rückstellkraft wirkt.

4. Kupplungskopfeinheit nach einem der Ansprüche 2 oder 3, **dadurch gekennzeichnet, dass** das zweite Ventil (20) mit dem Steueranschluss (3) über ein Koppelglied (22) verkoppelt ist, das einer von einem elastischen Element (23) ausgeübten Rückstellkraft ausgesetzt ist, die das Koppelglied (22) bei Fehlen einer Steuerleitung (S) am Steueranschluss (3) in seine Ausgangsstellung bewegt.

5. Kupplungskopfeinheit nach einem der voranstehenden Ansprüche, **dadurch gekennzeichnet, dass** mindestens eines der Stellelemente (14,17) ein elastisches Element (16,24) umfasst, das eine in die Neutralstellung des jeweiligen Stellelements (14,17) gerichtete elastische Rückstellkraft ausübt.
